# EUROPEAN PATENT APPLICATION

(11) **EP 3 151 516 A1**
(43) Date of publication of application: **05.04.2017**
(21) Application number: 16185080.5
(22) Date of filing: 22.08.2016
(51) Int. Cl.: H04L 29/08

(54) **METHOD FOR INTER VEHICLE COMMUNICATION AND A SYSTEM THEREOF**

(30) Priority: 29.09.2015 IN 5195CH2015
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Kamath, Ashwath, 560011 Bangalore (IN)
(74) Representative: Bee, Joachim

(57) **Abstract**

An inter vehicle communication system (1000) is disclosed. The system (1000) comprises a transceiver (11) of a vehicle (100) adapted to receive a message from a transceiver (21a, 21b, ..., 21n) of each of a plurality of surrounding-vehicles (200a, 200b, ..., 200n); a controller (10) of the vehicle (100) adapted to group at least one surrounding-vehicle (200a, 200b, ..., 200n) based on a content of the received message; the controller (10) of the vehicle (100) adapted to identify a closest surrounding-vehicle in each of the group based on a propagation delay of the received message; the controller (10) of the vehicle (100) adapted to process the message from the closest surrounding-vehicle in each of the group; and the transceiver (11) adapted to send an acknowledgement message to the transceiver of the closest surrounding-vehicle to stop further transmission of the message.

## Description

The following specification describes and ascertains the nature of this invention and the manner in which it is to be performed:

### Field of the invention

The invention relates to an inter vehicle communication system. More specifically, the invention relates to exchange of information between vehicles as they travel along a road.

### Background of the invention

Currently, there exists a number of techniques for inter vehicle communication for exchange of messages between vehicles. A vehicle travelling along a road receives information, for example, any environmental information, through sensors installed in the vehicle. The vehicle processes the information and sends the information over a designated protocol when there is a provision to access the bandwidth meant for the information. Currently, vehicular ad hoc networks VANETs are the networks through which the vehicle to vehicle communication takes place.

When multiple source vehicles transmit the same information to a destination vehicle, the destination vehicle rejects the redundant information transmitted by multiple source vehicles. If the destination vehicle rejects the information from one of the multiple source vehicles, then the information sent by the source vehicle exists in the communication channel. This increases redundancy and the misuse of the bandwidth meant for the transmission of the information. Thus, an inter vehicle communication system with provides a reduced overhead of bandwidth usage for the same information when sent by multiple source vehicles to at least one destination vehicle.

US patent, 6580981, discloses a system and method for sending and receiving messages, such as status or request-for-help messages, automatically between mobile nodes and ultimately to an appropriate destination via a wireless infrastructure. When a node determines that such infrastructure is not available, the node will communicate the necessary information to another mobile node located in, for instance, a vehicle. In this case, the receiving node stores the information, then transmits the information from that node to the wireless infrastructure equipment, so that the infrastructure can forward the message to an appropriate destination once such equipment is in range of this second node.

### Short description of the drawing

An exemplifying embodiment of the invention is explained in principle below with reference to the drawings. The drawings are,
Figure 1 illustrates a block diagram of an inter vehicle communication system for communicating between a plurality of vehicles in accordance with this invention;
Figure 2 illustrates transmission of at least one message between vehicles along a road using the inter vehicle communication system; and
Figure 3 illustrates a method for inter vehicle communication in accordance with this invention.

### Description of the invention

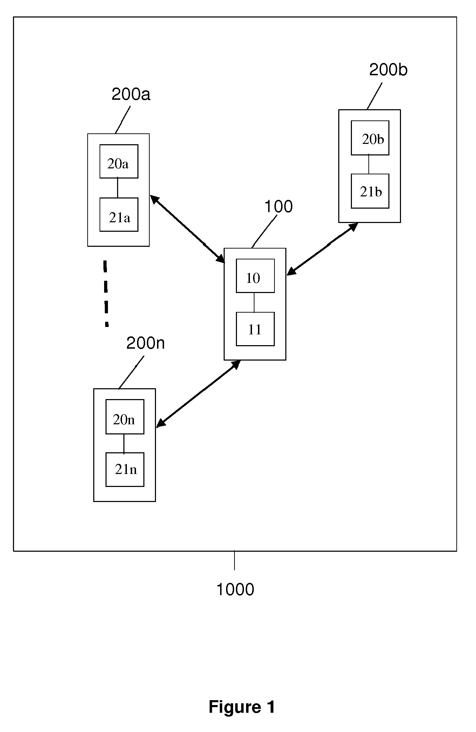

Figure 1 illustrates an inter vehicle communication system (1000) for communicating between a plurality of vehicles in accordance with this invention. The inter vehicle communication system (1000) facilitates communication among vehicles having wireless communication links. The inter vehicle communication system (1000) comprises a plurality of vehicles (100, 200a, 200b, ...200n). Each of the vehicles (100, 200a, 200b, ...200n) comprises a controller (10, 20a, 20b, ...20n) and a transceiver (11, 21a, 21b, ...21n). The transceiver of a vehicle transmits messages to transceivers of other vehicles and receives messages from transceivers of other vehicles. The controllers (10, 20a, 20b, ...20n) of the vehicles are in communication with each other. The controller (10) of a vehicle (100) controls the transceiver (11) of the vehicle (100) to transmit and receive the messages. Each of the controller (10, 20a, 20b, ...20n) in the inter vehicle communication system (1000) communicate with each other using directional propagation protocol (DPP).

In an example, the vehicle (100) and the surrounding-vehicles (200a, 200b, ..., 200n) travel in the same direction. This allows directional transmission of a message from a vehicle to another vehicle travelling in the same direction. For example, the inter vehicle communication system (1000) allows transmission of a message from a vehicle to another vehicle travelling behind the vehicle. Since the DPP is used by the controller (20a, 20b, ..., 20n) of each of the surrounding-vehicle (200a, 200b, ..., 200n) to transmit the message, the transmitted message is direction specific. This prevents fading of the message in other directions.

The transceiver (11) of a vehicle (100) is adapted to receive a message from a transceiver (21a, 21b, ..., 21n) of each of a plurality of surrounding-vehicles (200a, 200b, ..., 200n). Figure 1 shows three surrounding-vehicles (200a, 200b, ..., 200n) for illustration purpose. The transceiver (21a, 21b, ..., 21n) of at least one surrounding-vehicle (200a, 200b, ..., 200n) transmits a message comprising data packets. The controller (10) of the vehicle (100) is adapted to group at least one surrounding-vehicle (200a, 200b, ..., 200n) based on a content of the received message. The content of the received message comprises a weather forecast, an emergency situation, a traffic condition update, an advertisement or the like. The content of the message is, for example, information regarding a traffic congestion, an emergency event such as an accident, etc.

The controller (10) reads the message transmitted by the surrounding-vehicles (200a, 200b, ..., 200n). The controller (10) reads the content of the message using any existing protocol reading algorithms. The controller (10) groups the surrounding-vehicles (200a, 200b, ..., 200n) transmitting the same message based on the content. The controller (10) creates a group for each type of content transmitted by the surrounding-vehicles (200a, 200b, ..., 200n). For example, the controller (10) of the vehicle (100) creates 'n' number of groups of the surrounding-vehicles (200a, 200b, ..., 200n) for 'n' different types of content.

The controller (10) of the vehicle (100) is adapted to identify a closest surrounding-vehicle in each of the group based on a propagation delay of the received message. The message transmitted by the transceiver (21a, 21b, ..., 21n) of at least one surrounding-vehicle (200a, 200b, ..., 200n) to the vehicle (100) comprises a propagation delay. The propagation delay is transmitted as at least one bit of the message. The propagation delay of the received message is the time taken for a message to reach the vehicle (100) from a surrounding-vehicle (200a, 200b, ..., 200n). A counter starts counting when a message is transmitted from a surrounding-vehicle (200a, 200b, ..., 200n) to the vehicle (100). The counter stops counting when the message is received by the vehicle (100). This gives the propagation delay of the message transmitted by the surrounding-vehicle (200a, 200b, ..., 200n) to the vehicle (100). The transceiver (11) of the vehicle (100) receives the message from the transceiver (21a, 21b, ..., 21n) of each of the at least one surrounding-vehicle (200a, 200b, ..., 200n).

The controller (10) of the vehicle (100) determines the message with the least propagation delay in each group. The controller (10) of the vehicle (100) identifies the surrounding-vehicle (200a, 200b, ..., 200n) with the least propagation delay as the closest surrounding-vehicle. Further, the controller (10) of the vehicle (100) identifies the closest surrounding-vehicle in each group.

The controller (10) of the vehicle (100) is adapted to process the message from the closest surrounding-vehicle in each of the group. The controller (10) of the vehicle (100) responds based on the message from the closest surrounding-vehicle in each of the group. The transceiver (11) of the vehicle (100) sends the acknowledgement message to the closest surrounding-vehicle to stop further transmission to the vehicles travelling behind the vehicle (100).

In an embodiment, the transceiver of the closest surrounding-vehicle in each of the group receives the acknowledgement message. The controller of the closest surrounding-vehicle in each of the group discontinues broadcasting of the message upon reception of the acknowledgement message. The controller of the closest surrounding-vehicle in each of the group controls the corresponding transceiver of the closest surrounding-vehicle to discontinue broadcasting of the message for a predefined time interval.

In another embodiment, the transceiver (11) of the vehicle (100) is adapted to further forward at least one the received message to a plurality of surrounding-vehicle (200a, 200b, ..., 200n) following the vehicle (100) within a predefined distance.

The inter vehicle communication system (1000) thus stops the transmission of the redundant information by the surrounding-vehicles (200a, 200b, ..., 200n) and reduces the overhead of bandwidth usage for transmission the same message by multiple surrounding-vehicles (200a, 200b, ..., 200n).

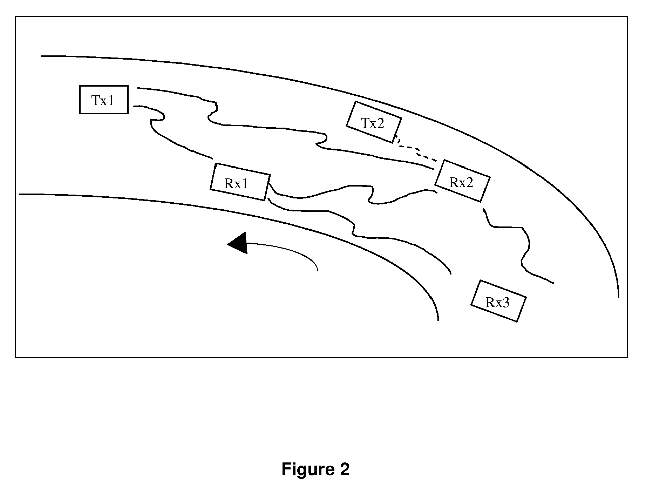

Figure 2 exemplary illustrates transmission of at least one message between vehicles in the inter vehicle communication system (1000). Here, a transmitter 1, Tx1, is a first entity, present in a first car, which acts as a source of information and initiates the transmission of a first message. A receiver 1, Rx1, is a second entity, for example, present in a second car. Similarly receiver 2 is represented as Rx2 and receiver 3 is represented as Rx3 are present in a third car and a fourth car respectively. Another transmitter Tx2 is present in another car. Also, it is considered here that each of the entities - Tx1, Tx2, Rx1, Rx2 and Rx3 comprises a transceiver and a controller, wherein the controller controls the transceiver to receive and transmit the messages. Also, it is assumed that all the four cars are travelling in the same direction indicated by an arrow in the Figure 2. The transmission of the first message between the entities is represented as a continuous line. The transmission of a second message between the entities is represented as a dashed line.

The Tx1 transmits the first message to Rx1, Rx2 and Rx3. The Rx1 receives the first message from Tx1 earlier than any other entities Rx2 or Rx3 as the Rx1 is closest to the Tx1 as shown in the Figure 2. The Rx1 receives the first message from the Tx1 before Rx2 and Rx3, Rx1 acts as the transmitter of the first message received from Tx1 and further transmits the first message to surrounding-vehicles following Rx1. The Rx1 updates the source address to its self-address and resets the propagation delay to zero in the first message as it acts as a virtual transmitter. The Rx1 communicate the first message with propagation delay as zero.

Also, Rx1 sends back a first acknowledgement message to the transmitter Tx1 to stop the communication of the first message for a predefined time interval. But, until the Tx1 receives the first acknowledgement message from Rx1, Tx1 continues transmission of the first message. Thus, Tx1 and Rx1 transmit the first message to Rx2 which is within a predefined radius from Tx1 and Rx1. The Rx2 receives the first message from both Tx1 and Rx1. The Rx2 compares the propagation delay of the first message received from Tx1 and Rx1. Since Rx1 makes the propagation delay as zero before transmission of message, Rx1 is nearer to Rx2 than Tx1. The Rx2 accepts the first message received from Rx1 and discards the first message received from Tx1. The Rx2 transmits the first acknowledgement message to Rx1.

Once Tx1 receives the first acknowledgement message from Rx1, Tx1 stops the transmission of the first message. In this case, Rx2 does not receive the first message from the Tx1. The Rx2 transmits the first acknowledgment message to Rx1.

In another case, Tx2 transmits a second message to surrounding vehicles. Now, Rx2 receives the second message from Tx2 while Rx1 does not receive the second message from Tx2, as it is beyond a predefined distance from Tx2. The Rx2 compares to check if the messages received from Tx2 and Rx1 are same or not. Since, in this case the first message is not equal to the second message, the Rx2 accepts both the messages. The Rx2 also transmits the first acknowledgement message to Rx1 and a second acknowledgement message to Tx2. Here, it is considered that Tx2 and Rx1 are transmitting different messages and are closest to Rx2.

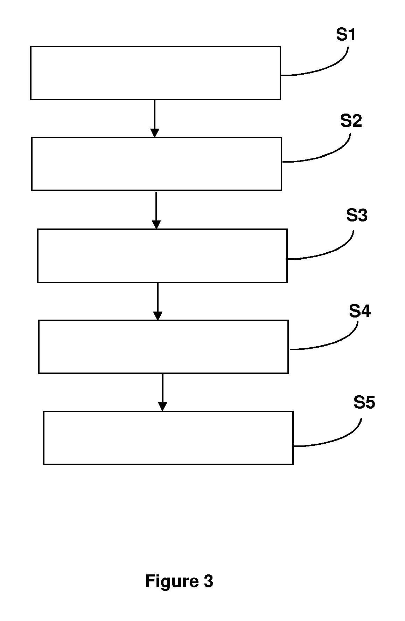

Figure 3 illustrates a method for inter vehicle communication in accordance with this invention. The method involves receiving a message from a transceiver (21a, 21b, ..., 21n) of each of a plurality of surrounding-vehicles (200a, 200b, ..., 200n) by a transceiver (11) of a vehicle (100) at step S1. At step S2, the controller (10) of the vehicle (100) is adapted to group at least one surrounding-vehicle (200a, 200b, ..., 200n) based on a content of the received message. At step S3, controller (10) of the vehicle (100) identifies a closest surrounding-vehicle in each of the group based on a propagation delay of the received message. At step S4, controller (10) of the vehicle (100) is adapted to process the message from the closest surrounding-vehicle in each of the group. At step S5, the transceiver (11) is adapted to send an acknowledgement message to the transceiver of the closest surrounding-vehicle to stop further transmission of the message.

Thus, the inter vehicle communication system (1000) enables efficient usage of communication bandwidth by preventing redundant transmission of information. The inter vehicle communication system (1000) provides safer lane changes by transmitting useful traffic information thereby reduces driver's stress. The inter vehicle communication system (1000) may also provide the driver of vehicle with information regarding weather which helps him decide the route to a destination. The inter vehicle communication system (1000) may be used to transfer traffic congestion information, details regarding emergency vehicles, etc.

It must be understood that the embodiments explained and the example provided in the above detailed description in only illustrative and does not limit the scope of this invention. The scope of this invention is limited only by the scope of the claims. Many modification and changes in the embodiments aforementioned are envisaged and are within the scope of this invention.

## Claims

1. A method for inter vehicle communication, said method comprising
- receiving a message from a plurality of surrounding-vehicles (200a, 200b, ..., 200n) by a transceiver (11) of a vehicle 100;
- grouping at least one surrounding-vehicle (200a, 200b, ..., 200n) based on a content of said received message by a controller (10) of the vehicle 100;
- identifying a closest surrounding-vehicle in each of said group based on a propagation delay of the received message by the controller (10) of the vehicle 100;
- processing said message from said closest surrounding-vehicle in each of said group by the controller (10) of the vehicle 100; and
- sending an acknowledgement message to said closest surrounding-vehicle to stop further transmission of said message by the transceiver (11) of the vehicle (100).

2. The method as claimed in claim 1, wherein said propagation delay of said received message is the time taken for a message to reach said vehicle (100) from a surrounding-vehicle (200a, 200b, ..., 200n).

3. The method as claimed in claim 1, further comprising forwarding said received message to a plurality of surrounding-vehicles (200a, 200b, ..., 200n) following said vehicle 100.

4. The method as claimed in claim 1, wherein said at least one surrounding-vehicle (200a, 200b, ..., 200n) are within a predefined distance from said vehicle (100).

5. The method as claimed in claim 1, wherein said content of said received message comprises a weather forecast, an emergency situation, a traffic condition update, an advertisement or the like.

6. An inter vehicle communication system (1000) for communicating between a plurality of vehicles, comprising:
- a transceiver (11) of a vehicle (100) adapted to receive a message from a transceiver (21a, 21b, ..., 21n) of each of a plurality of surrounding-vehicles (200a, 200b, ..., 200n);
- a controller (10) of the vehicle (100) adapted to
▪ group at least one surrounding-vehicle (200a, 200b, ..., 200n) based on a content of said received message;
▪ identify a closest surrounding-vehicle in each of said group based on a propagation delay of the received message;
▪ process said message from said closest surrounding-vehicle in each of said group; and
- said transceiver (11) adapted to send an acknowledgement message to said transceiver of said closest surrounding-vehicle to stop further transmission of said message.

7. The system (1000) as claimed in claim 6, wherein said propagation delay of said received message is the time taken for a message to reach said vehicle (100) from a surrounding-vehicle (200a, 200b, ..., 200n).

8. The system (1000) as claimed in claim 6, further comprises said transceiver (11) of said vehicle (100) adapted to transmit said received message to said at least one surrounding-vehicle (200a, 200b, ..., 200n).

9. The system (1000) as claimed in claim 6, wherein said content of said received message comprises a weather forecast, an emergency situation, a traffic condition update, an advertisement or the like.
